# EUROPEAN PATENT SPECIFICATION

(11) **EP 2 966 713 B1**
(45) Date of publication and mention of the grant of the patent: **15.01.2020**
(21) Application number: 14759470.9
(22) Date of filing: 04.03.2014
(51) Int. Cl.: H01M 4/58, B82Y 30/00, C01B 25/45, H01M 4/36, H01M 4/587, H01M 4/62, H01M 10/0525

(54) **PREPARATION METHOD OF POROUS MANGANESE LITHIUM PHOSPHATE-CARBON COMPOSITE MATERIAL**
HERSTELLUNGSVERFAHREN FÜR PORÖSES MANGAN-LITHIUM-PHOSPHAT-KOHLENSTOFF-VERBUNDSTOFFMATERIAL
PROCÉDÉ DE PRÉPARATION POUR MATÉRIAU COMPOSITE POREUX DE PHOSPHATE DE LITHIUM AU MANGANÈSE-CARBONE

(30) Priority: 04.03.2013 CN 201310067317; 19.06.2013 CN 201310242754
(43) Date of publication of application: 13.01.2016
(73) Proprietor: Suzhou Institute of Nano-Tech and Nano-Bionics, Chinese Academy of Sciences, Jiangsu 215123 (CN)
(72) Inventor: LIU, Tao, Suzhou Jiangsu 215123 (CN); WU, Xiaodong, Suzhou Jiangsu 215123 (CN)
(74) Representative: Proi World Intellectual Property GmbH
(86) International application number: PCT/CN2014/000196
(87) International publication number: WO 2014/134969

(56) References cited:
- WO-A2-2008/060701
- CN-A- 102 013 475
- CN-A- 102 460 786
- US-A1- 2011 012 067
- US-A1- 2012 100 422
- US-A1- 2012 241 666
- MAJA PIVKO ET AL: "Synthesis of Nanometric LiMnPO 4 via a Two-Step Technique", CHEMISTRY OF MATERIALS, vol. 24, no. 6, 7 February 2012 (2012-02-07), pages 1041-1047, XP055235889, US ISSN: 0897-4756, DOI: 10.1021/cm203095d
- URSZULA DETTLAFF-WEGLIKOWSKA ET AL: "Preparation and electrochemical characterization of LiMnPO 4 /single-walled carbon nanotube composites as cathode material for Li-ion battery", PHYSICA STATUS SOLIDI (B), vol. 246, no. 11-12, 1 December 2009 (2009-12-01), pages 2482-2485, XP055068447, ISSN: 0370-1972, DOI: 10.1002/pssb.200982290
- Tao Liu ET AL: "Porous LiMn0.7Fe0.3PO4-C prepared by a thermal decomposition method as high performance cathode materials for Li-ion batteries", RSC Advances: an international journal to further the chemical sciences, vol. 3, no. 32, 1 January 2013 (2013-01-01), page 13337, XP055285907, GB ISSN: 2046-2069, DOI: 10.1039/c3ra41672k

## Description

### Technical Field of the Present Invention

The present invention particularly relates to a preparation method of a lithium manganese phosphate-carbon composite material having a porous nanostructure. The composite material is suitable, for example, for an application in batteries, particularly in cathodes of Li-ion secondary batteries.

### Background of the Present Invention

The phosphate material LiMPO₄ (M = Fe, Mn, Ni, Co) of an olivine structure, serving as the cathode material of a Li-ion battery, has a theoretical capacity of about 170 mAh/g, and meanwhile has many advantages such as stable structure, low reactivity with the electrolyte, high safety and good battery cyclability. Among such phosphate materials, LiFePO₄ is relatively simple in synthesis and has realized mass production and marketing. However, due to a low lithium deintercalation potential plateau (about 3.4 V), LiFePO₄ reduces the overall energy density of a battery, so that the application of LiFePO₄ in electric vehicles is restricted. As LiMnPO₄ has a working voltage of 4.1 V vs. Li, LiMnPO₄ is able to increase the energy density by about 20% on the basis of that of LiFePO₄. Therefore, LiMnPO₄ may become a first choice of cathode material of batteries for electric vehicles in the future.

The main restriction to the large-scale application of LiMnPO₄ is a lower electron conductivity (< 10⁻¹⁰S•cm⁻¹) and Li-ion diffusion rate than LiFePO₄, thereby resulting in an extremely low charge/discharge capacity and low rate performance of batteries. In order to improve the Li-ion transmission efficiency and electron conduction efficiency, the size of lithium manganese phosphate particles must be reduced to a nanometer level. However, it is difficult to obtain LiMnPO₄ nanostructure material by the traditional solid-state reaction methods. In addition, it is also required to perform iron doping and effective carbon coating to lithium manganese phosphate so as to improve the electrical conductivity of the material. Although it has been reported that the nanometer-level lithium manganese phosphate material has been obtained by a hydrothermal method , a sol-gel method or other methods, such preparation methods are complicated and high in cost; furthermore, the dispersed nanoparticles have a very low tap density, so that the volumetric energy density is very low and it is disadvantageous for practical applications. In addition, as LiMnPO₄ does not show good affinity with carbon, the effect of carbon coating in the existing preparation methods is generally not ideal. In order to obtain a higher discharge capacity, it is required to add as high as 20 wt% to 30 wt% carbon, which, however, further reduces the power density of the batteries.

### Relevant Prior Art Documents

M. Pivko, M. Bele, E. Tchernychova, N. Zabukovec Logar, R. Dominko, M. Gaberscek, Chem. Mater., 2012, 24 (6), pp 1041-1047: Described is a two-step procedure for preparation of LiMnPO₄ with small particle size (15-20 nm) and embedded in a carbon matrix. The prepared LiMnPO₄ shows a good theoretical capacity and a stable cycling.

US 2012/100422 A1: The document presents a nano-composite porous electrode material that has a porous structure such that nano-size pores are three-dimensionally connected with each other wherein walls of the pores thereof are composed of olivine type LiMnPO₄ and carbon.

US 2012/241666 A1: The document presents a cathode active material precursor for a rechargeable lithium battery including hollow nanofibrous carbon for use as a composite cathode active material precursor for a rechargeable lithium battery including hollow nanofibrous carbon. Further, the document presents a cathode active material precursor joined to the skeleton of the hollow nanofibrous carbon.

U. Dettlaff-Weglikowska, N. Sato, J. Yoshida, S. Roth, Phys. Status Solidi B, 2009, 246 (11-12), pp 2482-2485: The document focuses on the synthesis of nanocrystalline LiMnPO₄ and its composites with single-walled carbon nanotubes in order to apply them as cathode material in Li-ion batteries.

US 2011/012067 A1: The document relates to a lithium manganese phosphate/carbon nanocomposite as cathode material for rechargeable electrochemical cells with the general formula LiₓMn_{y}M_{1-y}(PO₄)_{z}/C.

T. Liu, J. Xu, B. Wu, Q. Xia, X. Wu, *RSC Adv.,* 2013, 3 (32), p 13337: The document presents micrometer LiMn_{0.7}Fe_{0.3}PO₄-C particles consisting of nanopores, prepared using MnPO₄•H₂O as the precursor, wherein the nanoparticles are formed by the thermal decomposition of the precursor.

### Summary of the Present Invention

An objective of the present invention is to, in view of the deficiencies in the prior art, provide a preparation method of a lithium manganese phosphate-carbon composite material having a porous structure.

To achieve above objective, the present invention employs the following technical solutions, according to the method of claim 1.

A porous lithium manganese phosphate-carbon composite material is provided, wherein multiple nano-pores are distributed in the composite material, the composite material includes lithium manganese phosphate material and carbon, and the lithium manganese phosphate material contains compounds in a general formula of LiMnₓM₁₋ₓPO₄, where M is any one of Fe, Co, Ni, Mg, Cu, Zn, Zr, Ti, Al, Cr and Ge, 0.7≤x<0.8, and the mass percentage content of carbon in the composite material is 0.1% to 30%.

Preferably, 0.7≤x≤0.8.

Preferably, M is any one of Fe, Co, Mg and Ni.

Further, the composite material preferably contains 1 wt% to 15 wt% of carbon.

More preferably, the composite material contains 3 wt% to 5 wt% of carbon.

Multiple pores having a pore diameter of 1 nm to 500 nm are distributed in the composite material. Preferably, multiple pores having a pore diameter of 1 nm to 100 nm are distributed in the composite material. More preferably, multiple pores having a pore diameter of 3 nm to 50 nm are distributed in the composite material.

The material thickness between adjacent pores in the composite material is 1 nm to 500 nm. Preferably, the material thickness between adjacent pores in the composite material is 1 nm to 200 nm. More preferably, the material thickness between adjacent pores in the composite material is 20 nm to 70 nm.

The volume of each of the pores distributed in the composite material is 0.01 cm³/g to 500 cm³/g. Preferably, the volume of each of the pores distributed in the composite material is 0.05 cm³/g to 1.0 cm³/g. More preferably, the volume of each of the pores distributed in the composite material is 0.05 cm³/g to 0.2 cm³/g.

The composite material refers to particles having a particle size of 0.1 µm to 500 µm. Preferably, the composite material refers to particles having a particle size of 0.1 µm to 150 µm. More preferably, the composite material refers to particles having a particle size of 1 µm to 50 µm.

A specific surface area of the composite material is 9 m²/g to 200 m²/g. Preferably, a specific surface area of the composite material is 9 m²/g to 100 m²/g. More preferably, a specific surface area of the composite material is 15 m²/g to 30 m²/g.

A tap density of the composite material is 0.1 g/cm³ to 10.0 g/cm³. Preferably, a tap density of the composite material is 0.5 g/cm³ to 4.0 g/cm³. More preferably, a tap density of the composite material is 0.8 g/cm³ to 2.0 g/cm³.

The above characteristics of the material obtained by the present invention greatly improve the electrical properties and volumetric energy density of the material, because, first, the size of primary particles forming the porous structure is below 100 nm, so that the transmission distance of Li ions and electrons in the active substance is shortened, and the rate performance is thus improved; second, the porous structure facilitates the permeation of an electrolyte; third, the porous structure may further slowly release the volumetric expansion of the material during the charge/discharge process and thus improve the structural stability and cyclic stability; and fourth, the porous microparticles have a higher tap density than the monodispersed nanoparticles (less than 0.5 g/cm³) and thus a higher volumetric energy density.

Further, the carbon is at least from amorphous carbon and/or carbon nanotubes and/or carbon nanofibers contained in the composite material.

Further, the carbon nanotubes include single-walled carbon nanotubes and multi-walled carbon nanotubes.

Further, the composite material contains carbon nanotubes or carbon nanofibers. Compounds in a general formula of LiMnₓM₁₋ₓPO₄ added during the preparation of the precursor is in-situ formed on a surface of the carbon nanotubes or carbon nanofibers. It can be seen from an electronic microscopic photo that the carbon nanofibers are distributed on the surface of and inside the lithium manganese phosphate particles, and the distance from the carbon nanofibers to the lithium manganese phosphate particles is less than 1 nm, so that the carbon nanotubes are in closer contact with the active substance. In comparison to the simple mixing of the compounds with the carbon nanotubes or nanofibers, the in-situ compounding of the carbon nanotubes and the compounds in a general formula of LiMnₓM₁₋ₓPO₄, results in the characteristics of a closer contact of lithium manganese phosphate with carbon nanotubes and a faster transmission of Li-ions and electrons to the inside of the active substance through the carbon nanotubes or nanofibers during the charge/discharge process.

Further, a distance from the carbon nanotubes or carbon nanofibers to the surface of the compounds in a general formula of LiMnₓM₁₋ₓPO₄ is less than 1 nm.

Further, the surface layer of the composite material is further coated with amorphous carbon.

A method for preparing the porous lithium manganese phosphate-carbon composite material is provided, including the following steps of:
mixing a pyrophosphate material with a lithium source to obtain a reaction precursor, and then calcining the reaction precursor at a constant temperature under a protective atmosphere or an air atmosphere to obtain the porous lithium manganese phosphate-carbon composite material; and
the pyrophosphate material contains compounds in a general formula of (MnₓM₁₋ₓ)₂P₂O₇ and 0 wt% to 30 wt% of carbon, where M is any one of Fe, Co, Ni, Mg, Cu, Zn, Zr, Ti, Al, Cr and Ge, and 0.7≤x≤0.8.

Further, M may be selected from Fe, Co, Mg and Ni.

Further, the method for preparing a porous lithium manganese phosphate-carbon composite material includes the following steps of: mixing the pyrophosphate material with the lithium source, or adding one or more than two of a doped metal source, a phosphorous source and a carbon source and then mixing, to obtain the reaction precursor, and then calcining the reaction precursor at a constant temperature under a protective atmosphere or an air atmosphere for a certain period of time to obtain the porous lithium manganese phosphate-carbon composite material.

In the method for preparing a porous lithium manganese phosphate-carbon composite material, the constant-temperature calcining of the reaction precursor is carried out at a temperature from 100°C to 2000°C, and the constant-temperature calcining of the reaction precursor lasts for 0-72h.

Further, in the method for preparing a porous lithium manganese phosphate-carbon composite material, the constant-temperature calcining of the reaction precursor is carried out at a temperature from 500°C to 900°C, and the constant-temperature calcining of the reaction precursor lasts for 1-30h.

Further, the method for preparing a porous lithium manganese phosphate-carbon composite material includes the following steps of: mixing the porous pyrophosphate material with a doped metal source, a lithium source, phosphate and a carbon source and then drying them to obtain a reaction precursor, and calcining the reaction precursor at a constant temperature of 500°C to 900°C under a protective atmosphere for 1-30h to obtain the porous lithium manganese phosphate-carbon composite material.

Further, the method for preparing a porous lithium manganese phosphate-carbon composite material includes the following step of: mixing a manganese source with a phosphorous source, or adding one or more than two of a doped metal source and a carbon source and then mixing, to obtain the pyrophosphate material.

Further, in the method for preparing a porous lithium manganese phosphate-carbon composite material, a temperature for heat treatment to the pyrophosphate ranges from 100°C to 2000°C, and the heat treatment lasts for 0-72h.

Further, in the method for preparing a porous lithium manganese phosphate-carbon composite material, a temperature for heat treatment to the pyrophosphate ranges from 400°C to 800°C, and the heat treatment lasts for 2-15h.

In the method for preparing a porous lithium manganese phosphate-carbon composite material, the pyrophosphate material is a porous material. Further, the pore diameter of the pyrophosphate material is 1 nm to 500 nm, and the particle size is 0.1 µm to 500 µm. Preferably, the pore diameter is 1 nm to 100 nm, and the particle size is 0.1 µm to 150 µm. More preferably, the pore diameter is 3 nm to 50 nm, and the particle size is 1 µm to 50 µm.

In the method for preparing a porous lithium manganese phosphate-carbon composite material, the reaction solution for preparing pyrophosphate may be stirred at 10°C to 100°C for 0.5-48h, filtered, dried, and heat-treated under a protective atmosphere or an air atmosphere for a certain period of time.

In the method for preparing a porous lithium manganese phosphate-carbon composite material, the raw materials for preparing pyrophosphate may be mixed for 4-20h, and then heat-treated under a protective atmosphere or an air atmosphere for a certain period of time.

In the method for preparing a porous lithium manganese phosphate-carbon composite material, the mixing method may be selected from, but not limited to, ball-milling, stirring and grinding. The mixing method is preferably ball-milling.

In the method for preparing a porous lithium manganese phosphate-carbon composite material, the solvent for ball-milling may be selected from, but not limited to, water, methanol, ethanol, acetone, ethyl acetate, benzene, methylbenzene, dichloroethane, trichloroethylene, etc. The solvent is preferably ethanol.

In the method for preparing a porous lithium manganese phosphate-carbon composite material, a process for preparing the pyrophosphate material includes the following steps of:
dispersing a manganese source and a phosphorus source, added with carbon nanotubes/nanofibers, or further added with a doped metal source, in a solvent consisting of ethanol and water, and then performing heat treatment under a protective atmosphere or an air atmosphere to form a manganese pyrophosphate-carbon nanotubes/nanofibers composite, i.e., the pyrophosphate material.

Furthermore, in the method for preparing a porous lithium manganese phosphate-carbon composite material, the process for preparing the pyrophosphate material includes the following steps of: mixing manganese nitrate aqueous solution with phosphoric acid aqueous solution, using a mixture of ethanol and water as a solvent, adding and dispersing carbon nanotubes/nanofibers in the solution, stirring the reaction solution for 0.5-48h at 10-100°C, filtering and drying, and performing heat treatment at 400-800°C under an inert atmosphere to obtain the manganese pyrophosphate-carbon nanotube/nanofibers composite.

Furthermore, the method for preparing a porous lithium manganese phosphate-carbon composite material includes the following steps of: mixing a manganese salt with phosphoric acid in a solvent mainly consisting of ethanol and water, stirring for 1-48h at 10-100°C, separating and drying the solid, and performing heat treatment to the solid at a temperature of 400-800°C under an air atmosphere or a protective atmosphere to obtain the pyrophosphate material.

The pyrophosphate is a metal pyrophosphate or a composite of a metal pyrophosphate and carbon.

Further, the metal pyrophosphate is preferably an iron manganese pyrophosphate ((MnₓFe₁₋ₓ)₂P₂O₇), cobalt manganese pyrophosphate ((MnₓCo₁₋ₓ)₂P₂O₇), magnesium manganese pyrophosphate ((MnₓMg₁₋ₓ)₂P₂O₇), nickel manganese pyrophosphate ((MnₓNi₁₋ₓ)₂P₂O₇), where 0.7≤x≤0.8.

Further, the composite of the metal pyrophosphate is preferably an iron manganese pyrophosphate ((MnₓFe₁₋ₓ)₂P₂O₇)-carbon nanotube composite material, iron manganese pyrophosphate ((MnₓFe₁₋ₓ)₂ P₂O₇)-carbon, cobalt manganese pyrophosphate ((MnₓCo₁₋ₓ)₂P₂O₇)-carbon, etc., where 0.7≤x≤0.8.

As a feasible implementation solution, the process for preparing the porous pyrophosphate material includes the following steps of:
s1: adding carbon nanotubes/nanofibers in the reaction solution for preparing manganese phosphate to obtain a manganese phosphate-carbon nanotube/nanofibers composite; and
s2: performing heat treatment to the manganese phosphate-carbon nanotube/nanofibers composite under a protective atmosphere to form a porous manganese pyrophosphate-carbon nanotube/nanofibers composite, i.e., the porous pyrophosphate material.

More specifically, the process for preparing the porous pyrophosphate material includes the following steps of: mixing manganese nitrate aqueous solution with phosphoric acid aqueous solution, using a mixture of ethanol and water as a solvent, adding and dispersing carbon nanotubes/nanofibers in the solution, stirring the reaction solution for 0.5-48h at 10-100°C, filtering and drying, and performing heat treatment at 400-800°C under an inert atmosphere to obtain the porous manganese pyrophosphate-carbon nanotube/nanofibers composite.

Further, the preparation method includes the following steps of: mixing a manganese salt, phosphate, a doped metal source and a carbon source, and then performing heat treatment at 400-800°C under an inert or air atmosphere to obtain the porous pyrophosphate material.

In an optional implementation solution not according to the invention, the preparation method may further include the following steps of: mixing a manganese salt with phosphoric acid in a solvent mainly consisting of ethanol and water, stirring for above 1h at 10-100°C, and separating and drying the solid. In the preparation method, the formation of micron-level granular solid of a micron size through the tight agglomeration of sediment products is necessary for the acquisition of porous micron-level Mn₂P₂O₇ particles and the final porous lithium manganese phosphate material in subsequent steps, so no any surfactant is required. Then, the solid is heat-treated at 400-800°C under an air atmosphere or a protective atmosphere to obtain porous micron-level Mn₂P₂O₇ particles, i.e., the porous pyrophosphate material.

In the present invention, the composition and structure of a cathode active material and a lithium battery are analyzed by the following methods.

X-rays diffraction: when the crystalline substance is irradiated by X-rays of a certain wavelength, the X-rays are scattered when encountering regularly arranged atoms or ions in the crystal, and the phase of the scattered X-rays in a certain direction is enhanced, so that a specific diffraction phenomenon corresponding to the crystal structure is shown. This test may be carried out on an XRD diffractometer, for example, a Bruker D8 Advance X-rays diffractometer.

Analysis of specific surface area: a sample is placed in a nitrogen atmosphere, and the surface (surface of through holes outside and inside particles) will show physical adsorption at a low temperature. When the adsorbed gas reaches a balance, an equilibrium adsorption pressure and an amount of the adsorbed gas are measured, and the adsorption capacity of a monomolecular layer of the sample to be tested may be obtained according to a BET equation, so that the specific surface area of the sample is calculated. This test may be carried out on a porous analyzer, for example, Micromeritics ASAP 2020.

Analysis of metal compositions: the composition and content of elements in the substance are determined by the wavelength and intensity of a characteristic spectrum emitted by gaseous atoms or ions of metal elements after excited. This test may be carried out on an atomic emission spectrometer, for example, Varian_700-ES.

Analysis of particle size: statistical analysis is performed through SEM and TEM pictures.

Pore volume: the pore volume is derived according to the theoretical solid-state density of a material and a measured tap density.

Constant-current charge/discharge test: a coin cell is assembled, and a charge/discharge test is performed at a constant current within a set range of voltage. This test may be carried out on a cycle tester, for example, Neware BTS2300.

The manganese source is substance for providing manganese, and may be selected from, but not limited to, a water-insoluble manganese source compound, for example, trimanganese tetroxide, manganese sesquioxide, manganese carbonate, manganese dioxide or manganese hydroxide, or a water-soluble manganese source compound, for example, manganese acetate, manganese acetate tetrahydrate, manganese chloride, manganese chloride tetrahydrate, manganese tetrachloride, manganese sulfate, manganese sulfate monohydrate, manganese sulfate dihydrate, manganese sulfate trihydrate, manganese sulfate tetrahydrate, manganese sulfate pentahydrate, manganese sulfate hexahydrate, manganese sulfate heptahydrate or manganese nitrate.

Further, the manganese source may be selected from, but not limited to, manganese nitrate, manganese acetate, manganese sulfate and hydrates thereof.

Further, the anion in the doped metal source is not specifically limited, and, for example, the doped metal source may be sulfate, nitrate, hydrochloride, acetate, oxalate, phosphate, etc. Form the standpoint of avoiding residual impurities in the obtained anode active material, organic acid salts, for example, acetate and sulfate, are preferably used. For example, the doped metal source is selected from one of soluble metal compounds of Fe, Co, Ni, Mg, Cu, Zn, Zr, Ti, Al, Cr, Ni, Ge. Further, the doped metal source may be selected from, but not limited to, ferric phosphate, ferrous oxalate, magnesium oxalate, magnesium acetate, ferrous sulfate, cobalt acetate, copper sulfate, nickel acetate, nickel sulfate, magnesium acetate, zinc acetate or ferric nitrate. Furthermore, the doped metal source may be selected from ferric phosphate, ferrous oxalate, magnesium oxalate, ferrous sulfate, ferric phosphate, cobalt sulfate, nickel sulfate, ferric nitrate and hydrates thereof. Furthermore, the doped metal source may be selected from ferric phosphate, ferrous oxalate, ferric nitrate, ferrous sulfate, nickel sulfate and magnesium oxalate.

Further, the phosphorus source is substance for providing phosphorus, and may be selected from, but not limited to, phosphoric acid (H₃PO₄), ammonium phosphate ((NH₄)₃PO₄), diammonium hydrogen phosphate ((NH₄)₂HPO₄), ammonium dihydrogen phosphate (NH4H₂PO₄), phosphorus pentoxide (P₂O₅), sodium dihydrogen phosphate, potassium dihydrogen phosphate, disodium hydrogen phosphate or dipotassium hydrogen phosphate. Furthermore, the phosphorus source may be selected from phosphoric acid (H₃PO₄), diammonium hydrogen phosphate ((NH₄)₂HPO₄) and ammonium dihydrogen phosphate (NH4H₂PO₄).

Further, the lithium source is substance for providing lithium, and may be selected from, but not limited to, lithium hydroxide (LiOH), lithium carbonate (Li₂CO₃), lithium chloride (LiCl), lithium acetate (CH₃COOLi), lithium sulfate, lithium nitrate, lithium iodide, lithium t-butoxide, lithium benzoate, lithium formate, lithium fluoride, lithium chromate, lithium citrate tetrahydrate, lithium aluminum tetrachloride, lithium bromide, lithium tetrafluoroborate, lithium phosphate, dilithium hydrogen phosphate, lithium dihydrogen phosphate or lithium oxalate. Furthermore, the lithium source may be selected from lithium hydroxide (LiOH), lithium carbonate (Li₂CO₃), lithium chloride (LiCI) or lithium acetate (CH₃COOLi).

Further, the carbon source includes carbon particles and/or a carbon precursor converted to conductive carbon by calcining.

The known carbon particles may be used as carbon particles of interest and the carbon particles are not limited thereto. The carbon particles may be, for example, carbon black, acetylene black, fullerene, carbon nanotubes (multi-walled carbon nanotubes, single-walled carbon nanotubes), carbon nanofibers, etc.

The carbon precursor may be, for example natural and synthetic organic polymer compounds (particularly water-soluble substance), such as polyethylene glycol, polyvinyl alcohol, polyolefin, polyacrylonitrile, cellulose, starch, granulated sugar, glucose, sucrose, maltose.; and polymerizable monomers (particularly unsaturated organic compounds containing carbon-carbon double bonds), such as acrylonitrile, divinyl benzene, vinyl acetate.Other suitable carbon precursors may be, for example, sugars, such as glucose; natural and synthetic organic polymers, such as cellulose acetate; aromatic compounds, such as aromatic acids (e.g., pyromellitic acid); organic solvents, such as dialkyl ketone (e.g., acetone) and alcohols (e.g., ethanol); and, citric acid, asphalt, Vitamin C, etc. Furthermore, the carbon precursor may be selected from polyethylene glycol, polyvinyl alcohol and glucose.

Further, the protective atmosphere is a closed gas environment having anti-corrosion components for preventing any component in a particular reaction system from reacting with foreign matters or preventing foreign matters from being introduced into a particular reaction system, and may be selected from, but not limited to, an atmosphere formed of any one or a combination of more than two of nitrogen, argon, a mixed gas of argon and hydrogen, a mixed gas of nitrogen and hydrogen, and acetylene. Furthermore, the protective atmosphere may be nitrogen, argon and a combination thereof.

An electrode is provided, including a substrate and a coating material distributed on the surface of the substrate, wherein the coating material contains the porous lithium manganese phosphate-carbon composite material described above.

Further, the coating material further includes a conductive material and/ or a binder.

The binder may be selected from, but not limited to, polytetrafluoroethylene, polyvinylidene fluoride, etc., and the conductive agent may be selected from, but not limited to, acetylene black, carbon black, graphite, etc.

To facilitate the application of the coating material onto the surface of the substrate, the porous lithium manganese phosphate-carbon composite material, the conductive material and the binder may be dispersed in a solvent to form slurry, and then the slurry is coated on the substrate by a scraper, where the solvent may be, but not limited to, N-methylpyrrolidone, etc.

A battery is provided, including the lithium manganese phosphate-carbon composite material or the electrode described above.

As a typical implementation solution, the battery includes an anode, a cathode, a diaphragm and an electrolyte, the cathode being the electrode described above.

Further, the battery includes a primary or secondary Li-ion battery.

The material of the anodes includes, for example, carbon material, such as artificial graphite, natural graphite, graphitized carbon fibers or amorphous carbon; lithium; alloys of lithium with silicon (Si), aluminum, tin (Sn), lead (Pb), zinc, bismuth (Bi), indium (In), magnesium, gallium (Ga) or cadmium (Cd); metal compounds which may be alloyed, such as Sn alloy and Al alloy; and, composites including metal compounds and carbon materials. Examples of a anode current collector include: copper, stainless steel, aluminum, nickel, titanium, sintered carbon, copper or stainless steel which is surface-treated by using carbon, nickel, titanium or silver, and aluminum cadmium alloy. The anode current collector may be used in any form of a membrane, a slice, a foil, a net, a porous structure, foam and non-woven fabric. The anode current collector is manufactured by scraping, metal calendering or other processes well-known in the art.

The electrolyte may be a liquid electrolyte, and may also be a solid electrolyte, an electrolyte gel containing a solvent, etc. Solution obtained by dissolving the electrolyte in an aprotic and non-aqueous solvent may be used as the liquid electrolyte. The non-aqueous solvent may be, for example, cyclic carbonate, such as ethylene carbonate, propylene carbonate, butylene carbonate, vinylene carbonate, etc.; chain carbonate, such as dimethyl carbonate, diethyl carbonate and dipropyl carbonate; and, γ-butyrolactone, sulfolane, 1,2-dimethoxyethane, 1,2-diethoxyethane, 2-methyltetrahydrofuran, 3-methyl-1,3-dioxolame, methyl propionate, methyl butyrate, etc. Particularly, from the standpoint of voltage stability, the non-aqueous solvent is preferably cyclic carbonate, such as ethylene carbonate, propylene carbonate and vinylene carbonate, and chain carbonate, such as dimethyl carbonate, diethyl carbonate and dipropyl carbonate. The non-aqueous solvent may be used alone, or a mixture of two or more thereof may be used. Lithium salts such as LiPF₆, LiClO₄, LiAsF₆, LiBF₄, LiCF₃SO₃ and LiN(CF₃SO₂)₂ may be used as the electrolyte. Among the lithium salts, LiPF₆ and LiBF₄ are preferable. The solid electrolyte may be, for example, a solid inorganic electrolyte, such as lithium nitride and lithium iodide, and an organic polymer electrolyte, such as poly(ethylene oxide), poly(methacrylate) and poly(acrylate). In addition, the material for forming the electrolyte gel is not specifically limited as long as this material may be gelled to absorb the liquid electrolyte. Here, examples of this material are fluorine polymers, such as poly(vinylidene fluoride) and vinylidene fluoride/hexafluoropropylene polymer.

The structure of the battery provided by the present invention is not specifically limited to a cylindrical, square, coin or button shape, and may be of various sizes, for example, thin, large size, etc. In addition, the present invention may be applied to primary or secondary batteries.

Compared with the prior art, the present invention has at least the following advantages:
(1) the lithium manganese phosphate-carbon composite material is a micron-level lithium manganese phosphate material having nano-pores, and the lithium manganese phosphate-carbon composite material is high in specific capacity, rate performance and tap density when used as the cathode material of Li-ion batteries; and
(2) the lithium manganese phosphate-carbon composite material is simple in preparation, low in cost, low in the content of carbon and high in the content of active substance.

### Brief Description of the Drawings

In order to more clearly describe the technical solutions in embodiments of the present application or in the prior art, the accompanying drawings to be used for describing the embodiments or the prior art will be briefly described below. Apparently, the accompanying drawings in the following description are merely some embodiments recorded herein, and a person of ordinary skill in the art may obtain other accompanying drawings according to these accompanying drawings without any creative effort.
Fig. 1 is a scanning electron microscope (SEM) picture of a manganese pyrophosphate (Mn₂P₂O₇) sample prepared in Embodiment 1.
Fig. 2 is an SEM picture of an iron-doped lithium manganese phosphate-carbon composite material having a porous nanostructure prepared in Embodiment 1.
Fig. 3 is an XRD pattern of the iron-doped lithium manganese phosphate-carbon composite material prepared in Embodiment 1.
Fig. 4 is a graph showing charge and discharge curves of first two cycles of a coin cell prepared in Embodiment 1.
Fig. 5 is a graph showing the rate performance of the coin cell prepared in Embodiment 1.
Fig. 6 is an SEM picture of a manganese pyrophosphate-carbon nanotube composite prepared in Embodiment 6 of the present invention.
Fig. 7 is an SEM picture of a lithium manganese phosphate-carbon nanotube composite material prepared in Embodiment 6 of the present invention.
Fig. 8 is an XRD pattern of the lithium manganese phosphate-carbon nanotube composite material prepared in Embodiment 6 of the present invention.
Fig. 9 is a graph showing charge and discharge curves of a coin cell prepared in Embodiment 6 of the present invention.

### Detailed Description of the Present Invention

The technical solutions in the embodiments of the present invention will be described below in details with reference to the accompanying drawings in the embodiments of the present invention. Apparently, the embodiments described herein are merely a part of but not all of the embodiments of the present invention. Embodiments 1-10, 12, 14-22, and 25 presented here-below do not fall within the scope of the present invention.

### Embodiment 1

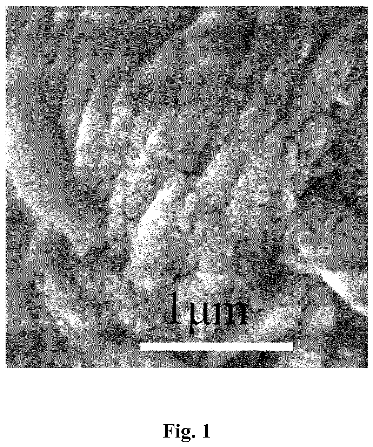

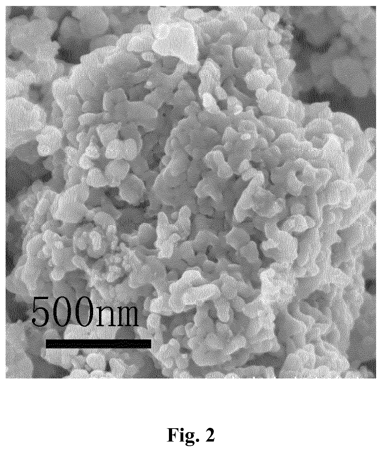

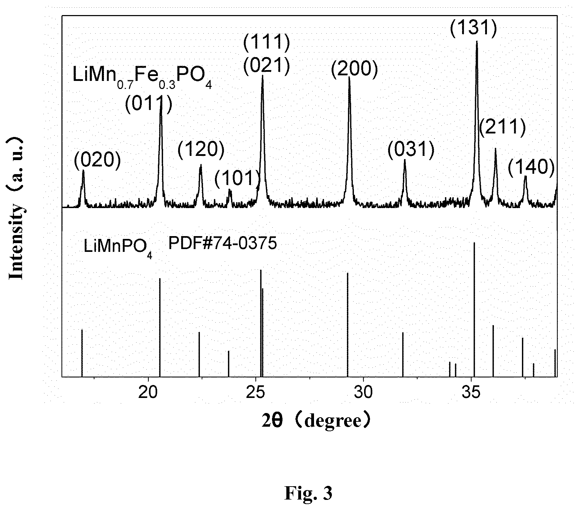

18 mL of 50% Mn(NO₃)₂ aqueous solution, 20 mL of 85% H₃PO₄ aqueous solution, 70 mL of ethanol and 20 mL of water are mixed and stirred for 18h at 25°C to obtain a MnPO₄·H₂O material. The MnPO₄·H₂O material is filtered and dried, and then heat-treated for 10h at 600°C under the Ar atmosphere to obtain an intermediate Mn₂P₂O₇. A scanning electron microscope (SEM) picture of a sample is as shown in Fig. 1. It can be seen that primary particles have a size of about 50 nm and are agglomerated together to form micro-spheres, with 5-50 nm of nano-pores formed between the particles. 0.8 g of Mn₂P₂O₇ is mixed with 0.44 g of ferrous oxalate (FeC₂O₄), 0.39 g of lithium hydroxide (LiO·H₂O), 0.28 g of ammonium dihydrogen phosphate (NH₄H₂PO₄) and 0.2 g of polyethylene glycol (PEG), and the mixture is added with 15 mL of ethanol, then ball-milled for 6h and dried at 80°C to obtain a second reaction precursor. The second reaction precursor is heat-treated for 10h at 600°C in the Ar gas flow to obtain a final product, i.e., a lithium iron manganese phosphate-carbon composite material. An SEM picture of the lithium iron manganese phosphate-carbon composite material is as shown in Fig. 2. It can be seen that particles are porous micro-spheres having a size of about 8 µm, with many nano-pores having a size of 3 nm to 50 nm formed between the micro-spheres, and the material thickness between the pores is 20 nm to 70 nm. An X-ray diffraction spectrum (XRD) of the lithium iron manganese phosphate-carbon composite material is as shown in Fig. 3. The spectral line is consistent with the physical phase of the PDF card #74-0375, so it is proved that the material having an olivine phase of LiMnPO₄ has been obtained. The partial shift of a peak is due to the diffusion and doping of iron. Through analysis by an atomic emission spectrometer, a ratio of atoms of Mn to Fe in the sample is 7: 3, so the structural formula of the lithium iron manganese phosphate material in the composite material may be expressed as LiMn_{0.7}Fe_{0.3}PO₄. Furthermore, through measurement by an elemental analyzer, the content of carbon by mass percentage in the composite material is about 3%. In addition, a BET specific surface area of the composite material is 18 cm²/g, and a tap density is 1.4 g/cm³.

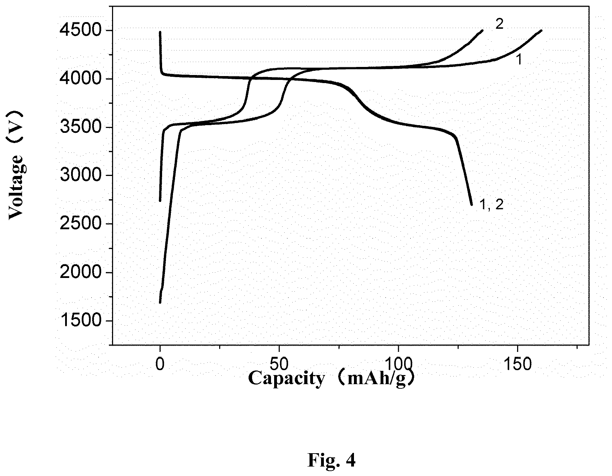

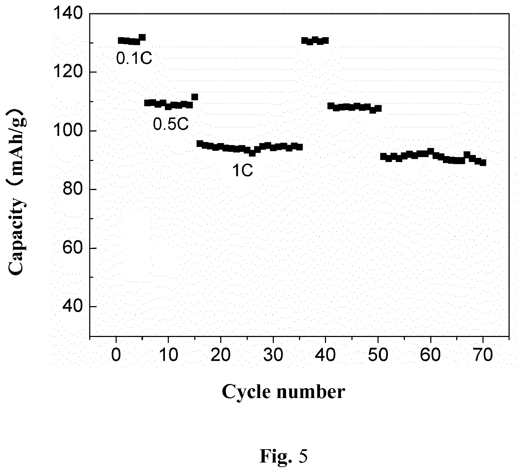

The prepared composite material is mixed with polyvinylidene fluoride and acetylene black at a mass ratio of 85: 7.5: 7.5 in a NMP solvent, and the mixture is then coated onto aluminum foil and dried in vacuum at 120°C to obtain an cathode. The cathode and a Li anode together form a 2025-type coin battery. At room temperature, within a voltage window of 2.7 V to 4.5 V, charge and discharge tests are performed at a current density of 0.1 C (1 C = 170 mA/g). It is measured that the initial discharge capacity of the cathode material is 132 mAh/g, and the reversible specific capacity is about 130 mAh/g. The curves of the first two cycles of charge and discharge are as shown in Fig. 4. The tested performance of the battery under different charge and discharge currents is as shown in Fig. 5. At 0.5 C, the specific capacity is about 110 mAh/g; and at 1C, the reversible specific capacity is about 95 mAh/g.

### Embodiment 2

18 mL of 50% Mn(NO₃)₂ aqueous solution, 20 mL of 85% H₃PO₄ aqueous solution, 70 mL of ethanol and 20 mL of water are mixed and stirred for 18h at 25°C to obtain a MnPO₄·H₂O material. The MnPO₄·H₂O material is filtered and dried, and then heat-treated for 5h at 600°C under the air atmosphere to obtain an intermediate Mn₂P₂O₇. 0.8 g of Mn₂P₂O₇ is mixed with 0.44 g of ferrous oxalate (FeC₂O₄), 0.39 g of lithium hydroxide (LiOH·H₂O), 0.28 g of ammonium dihydrogen phosphate (NH₄H₂PO₄) and 0.4 g of PEG, and the mixture is added with 15 mL of ethanol, then ball-milled for 6h and dried at 80°C to obtain a second reaction precursor. The second reaction precursor is heat-treated for 10h at 600°C in the Ar gas flow to obtain a final product, where the structural formula of the lithium iron manganese phosphate material is LiMn_{0.7}Fe_{0.3}PO₄. Through measurement by an elemental analyzer, the content of carbon in the composite material is about 4 wt%, and the pore volume is 0.1 cm³/g. It is measured by a same method as Embodiment 1 that the specific capacity of the initial discharge capacity of the cathode material is 130 mAh/g.

### Embodiment 3

18 mL of 50% Mn(NO₃)₂ aqueous solution, 20 mL of 85% H₃PO₄ aqueous solution, 70 mL of ethanol and 20 mL of water are mixed and stirred for 18h at 25°C to obtain a MnPO₄·H₂O material. The MnPO₄·H₂O material is filtered and dried, and then heat-treated for 5h at 600°C under the Ar atmosphere to obtain an intermediate Mn₂P₂O₇. 1.42 g of Mn₂P₂O₇ is mixed with 0.4 g of lithium carbonate (Li₂CO₃) and 0.5 g of glucose, and the mixture is added with 15 mL of ethanol, then ball-milled for 6h and dried at 80°C to obtain a second reaction precursor. The second reaction precursor is heat-treated for 10h at 700°C in the Ar gas flow to obtain a final product, where the structural formula is LiMnPO₄. Through measurement by an elemental analyzer, the content of carbon in the composite material is about 8 wt%. It is measured by a same method as Embodiment 1 that the initial discharge capacity of the cathode material is 30 mAh/g.

### Embodiment 4

18 mL of 50% Mn(NO₃)₂ aqueous solution, 20 mL of 85% H₃PO₄ aqueous solution, 70 mL of ethanol and 20 mL of water are mixed and stirred for 18h at 25°C to obtain a MnPO₄·H₂O material. The MnPO₄·H₂O material is filtered and dried, and then heat-treated for 5h at 600°C under the Ar atmosphere to obtain an intermediate Mn₂P₂O₇. 1.14 g of Mn₂P₂O₇ is mixed with 0.36 g of ferrous oxalate (FeC₂O₄), 0.49 g of lithium hydroxide (LiOH·H₂O), 0.23 g of ammonium dihydrogen phosphate (NH₄H₂PO₄) and 0.48 g of glucose, and the mixture is added with 15 mL of ethanol, then ball-milled for 6h and dried at 80°C to obtain a second reaction precursor. The second reaction precursor is heat-treated for 10h at 700°C in the Ar gas flow to obtain a final product, where the structural formula of the lithium iron manganese phosphate material is LiMn_{0.8}Fe_{0.2}PO₄. Through measurement by an elemental analyzer, the content of carbon in the composite material is about 9 wt%. It is measured by a same method as Embodiment 1 that the initial discharge capacity of the cathode material is 120 mAh/g.

### Embodiment 5

180 mL of 50% Mn(NO₃)₂ aqueous solution, 200 mL of 85% H₃PO₄ aqueous solution, 700 mL of ethanol and 200 mL of water are mixed and stirred for 2h at 70°C to obtain a MnPO₄·H₂O material. The MnPO₄·H₂O material is filtered and dried, and then heat-treated for 5h at 600°C under the Ar atmosphere to obtain an intermediate Mn₂P₂O₇. 1 g of Mn₂P₂O₇ is mixed with 0.45 g of ferric phosphate (FePO₄·H₂O), 0.49 g of lithium hydroxide (LiOH·H₂O) and 0.4 g of polyethylene glycol, and the mixture is added with 15 mL of methanol, then ball-milled for 6h and dried at 80°C to obtain a second reaction precursor. The second reaction precursor is heat-treated for 10h at 700°C in the Ar gas flow to obtain a final product, where the structural formula of the lithium iron manganese phosphate material is Limn_{0.8}Fe_{0.2}PO₄. Through measurement by an elemental analyzer, the content of carbon in the composite material is about 5 wt%. It is measured by a same method as Embodiment 1 that the specific capacity of the first time of discharge of the anode material is 120 mAh/g.

### Embodiment 6

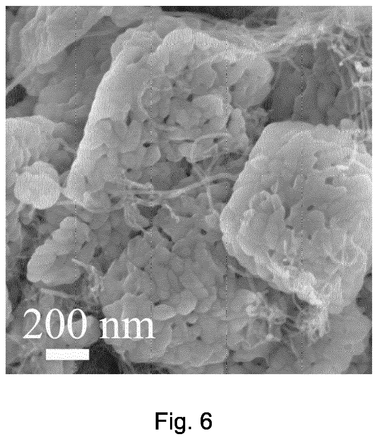

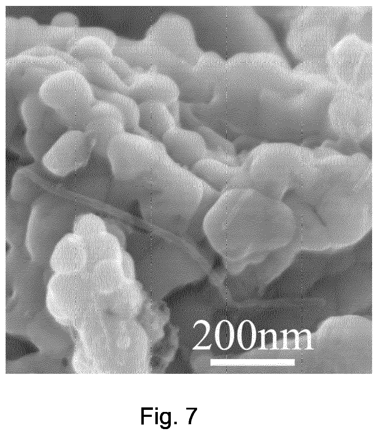

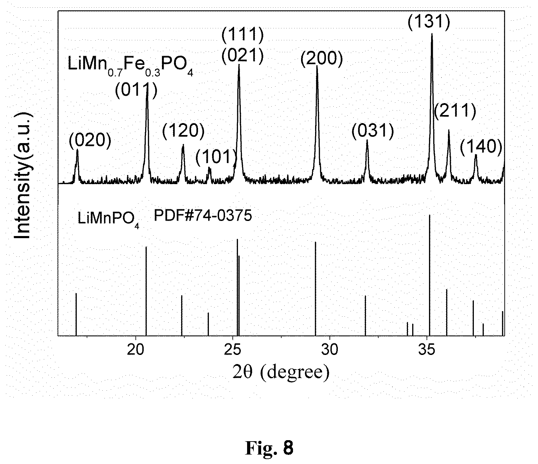

36 mL of 50% manganese nitrate aqueous solution, 40 mL of 85% phosphoric acid aqueous solution, 140 mL of ethanol and 40 mL of water are mixed, and the mixture is added with 0.5 g of multi-walled carbon nanotubes, then ultrasonically dispersed for 30 min and stirred for 24h at 25°C to obtain a manganese phosphate-carbon nanotube composite material. The manganese phosphate-carbon nanotube composite material is filtered and dried, and then heat-treated for 10h at 700°C under the Ar atmosphere to obtain an intermediate manganese pyrophosphate-carbon nanotube composite material. A scanning electron microscope (SEM) picture of a sample is as shown in Fig. 6. It can be seen that the particle size is of a micro-level, and carbon nanotubes and many pores having a size of 5-50 nm are formed between the particles. 1.08 g of the manganese pyrophosphate-carbon nanotube composite material is mixed with 0.55 g of ferrous oxalate, 0.49 g of lithium hydroxide, 0.35 g of ammonium dihydrogen phosphate and 0.25 g of polyethylene glycol, and the mixture is added with 15 mL of ethanol, then ball-milled for 6h and dried at 80°C to obtain a reaction precursor. The reaction precursor is heat-treated for 10h at 700°C in the Ar gas flow to obtain a final product, i.e., an iron-doped lithium manganese phosphate-carbon nanotube composite material. An SEM picture of the iron-doped lithium manganese phosphate-carbon nanotube composite material is as shown in Fig. 7. It can be seen that there are porous microparticles containing carbon tubes. An X-ray diffraction spectrum (XRD) of the iron-doped lithium manganese phosphate-carbon nanotube composite material is as shown in Fig. 8. The spectral line is consistent with the phase structure of the PDF card #74-0375, so it is proved that the structure is an olivine phase of LiMnPO₄. The partial shift of a peak is due to the doping of iron. Through analysis by an atomic emission spectrometer, a ratio of atoms of Mn to Fe in the sample is 7: 3, so the composition of the composite material may be expressed as LiMn_{0.7}Fe_{0.3}PO₄. A tap density of the material is 1.5 g/cm³. In addition, it can be seen that the carbon nanotubes are in close contact with the surface of lithium manganese phosphate particles, with a distance less than 1 nm and a BET specific surface area of 20 m²/g. Furthermore, the material is of a porous structure containing multiple pores having a diameter less than 50 nm. In addition, the particle surface of the product is further coated with amorphous carbon about 3 nm in thickness, which amorphous carbon is caused by the decomposition of polyethylene glycol.

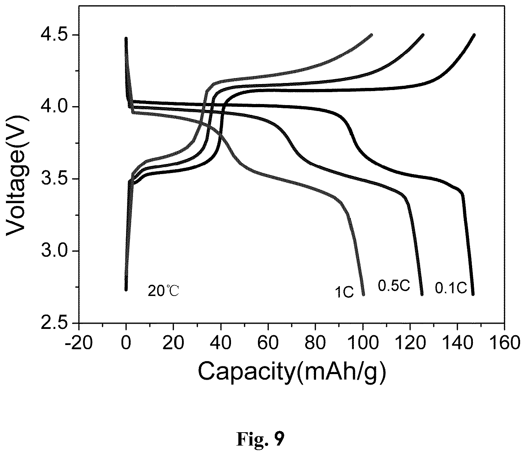

The prepared composite material is mixed with polyvinylidene fluoride and acetylene black at a mass ratio of 85: 7.5: 7.5 in a NMP solvent, and the mixture is then coated onto aluminum foil and dried in vacuum at 120°C to obtain a cathode. The cathode and a Li anode together form a 2025 coin cell. At 20°C, within a voltage window of 2.7 V to 4.5 V, charge and discharge tests are performed at a current density of 0.1 C (0.1 C = 170 mA/g). It is measured that the specific capacities of the composite material at charge and discharge current densities of 0.1 C, 0.5 C and 1 C are 140 mAh/g, 124 mAh/g and 100 mAh/g, respectively, so it can be seen that the composite material has a good rate capability, as shown in Fig. 9.

### Embodiment 7

18 mL of 50% manganese nitrate aqueous solution, 20 mL of 85% phosphoric acid aqueous solution, 70 mL of ethanol and 20 mL of water are mixed, and the mixture is added with 0.5 g of single-walled carbon nanotubes, then ultrasonically dispersed for 30 min and stirred for 24h at 25°C to a manganese phosphate-carbon nanotube composite material. The manganese phosphate-carbon nanotube composite material is filtered and dried, and then heat-treated for 10h at 700°C under the Ar atmosphere to obtain an intermediate, i.e., a manganese pyrophosphate-carbon nanotube composite material. 0.96 g of the manganese pyrophosphate-carbon nanotubes is mixed with 0.29 g of ferrous oxalate, 0.39 g of lithium hydroxide, 0.19 g of ammonium dihydrogen phosphate and 0.2 g of polyethylene glycol, and the mixture is added with 15 mL of ethanol, then ball-milled for 12h and dried at 80°C to obtain a reaction precursor. The reaction precursor is heat-treated for 10h at 700°C in the Ar gas flow to obtain a final product, i.e., an iron-doped lithium manganese phosphate-carbon nanotube composite material. The composition of the composite material may be expressed as LiMn_{0.8}Fe_{0.2}PO₄. It is measured by a same method as Embodiment 1 that the specific discharge capacity of the composite material at 0.1 C is 125 mAh/g.

### Embodiment 8

18 mL of 50% manganese nitrate aqueous solution, 20 mL of 85% phosphoric acid aqueous solution, 70 mL of ethanol and 20 mL of water are mixed, and the mixture is added with 0.5 g of carbon nanofibers, then ultrasonically dispersed for 30 min and stirred for 24h at 25°C to a manganese phosphate-carbon nanotube composite material. The manganese phosphate-carbon nanotube composite material is filtered and dried, and then heat-treated for 10h at 500°C under the Ar atmosphere to obtain an intermediate manganese pyrophosphate-carbon nanotube composite material. 1.16 g of the manganese pyrophosphate-carbon nanotubes is mixed with 0.32 g of lithium carbonate and 0.2 g of polyethylene glycol, and the mixture is added with 10 mL of ethanol, then ball-milled for 6h and dried at 80°C to obtain a reaction precursor. The reaction precursor is heat-treated for 10h at 700°C in the Ar gas flow to obtain a final product a lithium manganese phosphate-carbon nanotube composite material. Through elemental analysis, it is indicated that the content of carbon in the composite material is 5%. It is measured by a same method as Embodiment 1 that the specific discharge capacity of the composite material at 0.1 C is 30 mAh/g.

### Embodiment 9

18 mL of 50% manganese nitrate aqueous solution, 20 mL of 85% phosphoric acid aqueous solution, 70 mL of ethanol and 20 mL of water are mixed, and the mixture is added with 0.3 g of multi-walled carbon nanotubes, then ultrasonically dispersed for 30 min and stirred fro 12h at 25°C to a manganese phosphate-carbon nanotube composite material. The manganese phosphate-carbon nanotube composite material is filtered and dried, and then heat-treated for 10h at 700°C under the Ar atmosphere to obtain an intermediate manganese pyrophosphate-carbon nanotube composite material. 0.96 g of the manganese pyrophosphate-carbon nanotubes is mixed with 0.24 g of magnesium oxalate, 0.39 g of lithium hydroxide, 0.19 g of ammonium dihydrogen phosphate and 0.2 g of polyethylene glycol, and the mixture is added with 15 mL of ethanol, then ball-milled for 12h and dried at 80°C to obtain a reaction precursor. The reaction precursor is heat-treated for 10h at 700°C in the Ar gas flow to obtain a final product, i.e., an iron-doped lithium manganese phosphate-carbon nanotube composite material. The composition of the composite material may be expressed as LiMn_{0.8}Mg_{0.2}PO₄. It is measured by a same method as Embodiment 1 that the specific discharge capacity of the composite material at 0.1 C is 100 mAh/g.

### Embodiment 10

18 mL of 50% manganese nitrate aqueous solution, 20 mL of 85% phosphoric acid aqueous solution, 70 mL of ethanol and 10 mL of water are mixed, and the mixture is added with 0.2 g of multi-walled carbon nanotubes, then ultrasonically dispersed for 30 min and stirred fro 24h at 25°C to a manganese phosphate-carbon nanotube composite material. The manganese phosphate-carbon nanotube composite material is filtered and dried, and then heat-treated for 10h at 700°C under the Ar atmosphere to obtain an intermediate manganese pyrophosphate-carbon nanotube composite material. 1.08 g of the manganese pyrophosphate-carbon nanotubes is mixed with 0.55 g of ferrous oxalate, 0.49 g of lithium hydroxide, 0.35 g of ammonium dihydrogen phosphate and 0.25 g of glucose, and the mixture is added with 15 mL of ethanol, then ball-milled for 3h and dried at 100°C to obtain a reaction precursor. The reaction precursor is heat-treated for 20h at 600°C in the Ar gas flow to obtain an iron-doped lithium manganese phosphate-carbon nanotube composite material. The composition of the composite material may be expressed as LiMn_{0.7}Fe_{0.3}PO₄. It is measured by a same method as Embodiment 1 that the specific discharge capacity of the composite material at 0.1 C is 135 mAh/g.

### Embodiment 11

7 g of manganese sulfate (MnSO₄·H₂O), 5 g of ferrous sulfate (FeSO₄·H₂O), 12 g of ammonium phosphate ((NH₄)₃PO₄·H₂O), 1 g of citric acid and 10 mL of ethanol are ball-milled for 6h, and then heat-treated for 10h at 600°C under the N₂ atmosphere to obtain an intermediate porous iron manganese pyrophosphate ((Mn_{0.7}Fe_{0.3})₂P₂O₇), wherein the content of carbon is about 2 wt%, the particle size is about 1 µm, and there are pores having a size of 5 nm to 30 nm. 1 g of (Mn_{0.7}Fe_{0.3})₂P₂O₇, 0.26 g of lithium carbonate (Li₂CO₃) and 0.25 g of sucrose are ball-milled for 6h to obtain a reaction precursor. The reaction precursor is heat-treated for 10h at 800°C in the N₂ gas flow to obtain a final product, i.e., an iron-doped lithium manganese phosphate-carbon composite material. The composite material mainly contains a compound in a structural formula of LiMn_{0.7}Fe_{0.3}PO₄. After a cahode is manufactured by a same method as Embodiment 1, it is measured that the initial discharge capacity of the cathode material is 130 mAh/g.

### Embodiment 12

30 mL of 70% Mn(NO₃)₂ aqueous solution, 20 mL of 85% H₃PO₄ aqueous solution, 70 mL of ethanol and 50 mL of water are mixed, stirred for 18h at 75°C, filtered, dried, and heat-treated for 5h at 400°C under the Ar atmosphere to obtain an intermediate Mn₂P₂O₇. 1.42 g of Mn₂P₂O₇ is mixed with 0.4 g of lithium carbonate (Li₂CO₃) and 0.4 g of glucose, and the mixture is added with 15 mL of ethanol, then ball-milled for 6h and dried at 80°C to obtain a second reaction precursor. The second reaction precursor is heat-treated for 24h at 500°C in air to obtain a lithium manganese phosphate-carbon composite material, where the lithium manganese phosphate-carbon composite material mainly contains a compound in a structural formula of LiMnPO₄, and the content of carbon in the composite material is about 1 wt%. After a cathode is manufactured by a same method as Embodiment 1, it is measured that the initial discharge capacity of the cathode material is 30 mAh/g.

### Embodiment 13

7 g of manganese sulfate (MnSO₄·H₂O), 5 g of cobalt sulfate (CoSO₄·7H₂O), 12 g of ammonium phosphate ((NH₄)₃PO₄·H₂O) and 10 mL of ethanol are ball-milled for 6h, then dried, and heat-treated for 10h at 800°C under the N₂ atmosphere to obtain an intermediate porous cobalt manganese pyrophosphate ((Mn_{0.7}Cο_{0.3})₂P₂O₇). It is shown by a scanning electron microscope picture of the sample that primary particles have a size of about 60 nm and are agglomerated together to form micro-spheres, with 5-50 nm of nano-pores formed between the particles, a specific surface area of the material is 25 cm²/g, and a pore volume is 0.1 cm³/g. 1 g of (Mn_{0.7}Co_{0.3})₂P₂O₇, 0.26 g of lithium carbonate (Li₂CO₃) and 0.5 g of asphalt are added with 15 mL of ethanol. The mixture is ball-milled for 6h and dried at 60°C to obtain a reaction precursor. The reaction precursor is heat-treated for 15h at 600°C in the N₂ gas flow to obtain a cobalt-doped lithium manganese phosphate-carbon composite material. The composite material mainly contains a compound in a structural formula of LiMn_{0.7}Co_{0.3}PO₄. After a cathode is manufactured by a same method as Embodiment 1, it is measured that the initial discharge capacity of the cathode material at 0.1 C is 120 mAh/g.

### Embodiment 14

180 mL of 70% Mn(NO₃)₂ aqueous solution, 100 mL of 45% NH₄H₂PO₄ aqueous solution, 700 mL of ethanol and 500 mL of water are mixed, stirred for 2h at 70°C, filtered, dried, and heat-treated for 5h at 500°C under the Ar atmosphere to obtain an intermediate Mn₂P₂O₇. 1 g of Mn₂P₂O₇ is mixed with 0.45 g of ferric phosphate (FePO₄·H₂O), 0.49 g of lithium hydroxide (LiOH·H₂O) and 0.4 g of starch, and the mixture is added with 15 mL of methanol and then ball-milled for 6h to obtain a second reaction precursor. The second reaction precursor is heat-treated for 10h at 800°C in the Ar gas flow to obtain a lithium manganese phosphate-carbon composite material, where the lithium manganese phosphate-carbon composite material mainly contains a compound in a structural formula of LiMn_{0.8}Fe_{0.2}PO₄, the content of carbon in the composite material is about 5 wt%, and the pore volume is 0.15 cm³/g. After a cathode is manufactured by a same method as Embodiment 1, it is measured that the initial discharge capacity of the cathode material at 0.1 C is 120 mAh/g.

### Embodiment 15

10 g of manganese acetate (C₄H₆MnO₄·4H₂O), 2.16 g of ferrous oxalate (FeC₂O₄·2H₂O), 1.28 g of magnesium acetate (C₄H₆O₄Mg·4H₂O), 12 g of ammonium phosphate ((NH₄)₃PO₄·H₂O), 5 g of granulated sugar and 10 mL of methylbenzene are ball-milled for 12h, then dried and heat-treated for 5h at 700°C under the nitrogen atmosphere to obtain an intermediate porous iron magnesium manganese pyrophosphate ((Mn_{0.7}Fe_{0.2}Mg_{0.1})₂P₂O₇). The particle size is about 5 µm, and there are multiple pores having a size of 5 nm to 30 nm. 1 g of (Mn_{0.7}Fe_{0.2}Mg_{0.1})₂P₂O₇ is mixed with 0.3 g of lithium hydroxide (LiOH) and 0.5 g of sucrose, and the mixture is added with 15 mL of ethanol and ball-milled for 16h to obtain a reaction precursor. The reaction precursor is heat-treated for 15h at 700°C in the N₂ gas flow to obtain a lithium manganese phosphate-carbon composite material, where the lithium manganese phosphate-carbon composite material mainly contains a compound in a structural formula of LiMn_{0.7}Fe_{0.2}Mg_{0.1}PO₄. A tap density of the material is 1.8 g/cm³, and a specific surface area thereof is 20 m²/g. After a cathode is manufactured by a same method as Embodiment 1, it is measured that the specific capacity of the initial discharge capacity of the cathode material at 0.1 Cis 140 mAh/g.

### Embodiment 16

180 mL of 50% Mn(NO₃)₂ aqueous solution, 200 mL of 85% H₃PO₄ aqueous solution, 500 mL of ethanol and 20 mL of water are mixed, stirred for 2h at 10°C, filtered, dried, and heat-treated for 10h at 800°C under the air atmosphere to obtain an intermediate Mn₂P₂O₇. 1 g of Mn₂P₂O₇ is mixed with 0.45 g of ferric phosphate (FePO₄·H₂O), 0.49 g of lithium hydroxide (LiOH·H₂O) and 0.4 g of vitamin C, and the mixture is added with 15 mL of methanol and then ball-milled for 6h to obtain a second reaction precursor. The second reaction precursor is heat-treated for 30h at 700°C in the Ar gas flow to obtain a lithium manganese phosphate-carbon composite material, where the lithium manganese phosphate-carbon composite material mainly contains a compound in a structural formula of LiMn_{0.8}Fe_{0.2}PO₄, and the content of carbon in the composite material is about 5 wt%. After a cathode is manufactured by a same method as Embodiment 1, it is measured that the initial discharge capacity of the cathode material at 0.1 C is 125 mAh/g.

### Embodiment 17

7 g of manganese sulfate (MnSO₄·H₂O), 3.34 g of ferrous sulfate (FeSO₄·H₂O), 1.67 g of cobalt sulfate (CoSO₄·7H₂O), 12 g of ammonium phosphate ((NH₄)₃PO₄·H₂O), 1 g of sucrose and 10 mL of ethanol are ball-milled for 6h, then dried and heat-treated for 10h at 600°C under the N₂ atmosphere to obtain an intermediate cobalt iron manganese pyrophosphate ((Mn_{0.7}Fe_{0.2}Co_{0.1})₂P₂O₇). The content of carbon in the material is about 3%, the particle size is about 10 µm, and there are multiple pores having a size of 5 nm to 30 nm. 1 g of (Mn_{0.7}Fe_{0.2}Co_{0.1})₂P₂O₇ is mixed with 0.26 g of lithium carbonate (Li₂CO₃) and 0.5 g of vinyl acetate, and the mixture is added with 15 mL of acetone, then ball-milled for 12h and dried at 50°C to obtain a reaction precursor. The reaction precursor is heat-treated for 10h at 800°C in the Ar gas flow to obtain a final product, i.e., a Fe-Co-codoped lithium manganese phosphate-carbon composite material, where the composite material mainly contains a compound in a structural formula of LiMn_{0.7}Fe_{0.2}Co_{0.1}PO₄, and further contains 5% of carbon. After a cathode is manufactured by a same method as Embodiment 1, it is measured that the initial discharge capacity of the cathode material at 0.1 C is 125 mAh/g.

### Embodiment 18

7.24 g of manganese acetate (C₄H₆MnO₄·4H₂O), 6 g of ammonium phosphate ((NH₄)₃PO₄·H₂O), 0.75 g of vinyl acetate and 10 mL of methylbenzene are ball-milled for 12h, then dried and heat-treated for 5h at 600°C under the nitrogen atmosphere to obtain an intermediate Mn₂P₂O₇. The material contains 3% of carbon. 1 g of Mn₂P₂O₇ is mixed with 0.3 g of lithium hydroxide (LiOH), and the mixture is added with 15 mL of ethanol, then ball-milled for 16h and dried at 80°C to obtain a reaction precursor. The reaction precursor is heat-treated for 15h at 700°C in the N₂ gas flow to obtain a final product, where the final product mainly contains LiMnPO₄ and 2.5% of carbon. After a cathode is manufactured by a same method as Embodiment 1, it is measured that the initial discharge capacity of the cathode material at 0.1 C is 140 mAh/g.

### Embodiment 19

The composite material prepared by the method of Embodiment 1 is mixed with polyvinylidene fluoride and acetylene black at a mass ratio of 8: 1: 1 in a NMP solvent, and then the mixture is coated onto aluminum foil and dried in vacuum at 120°C to obtain a cathode of a Li-ion secondary battery. A anode active material using commercially available graphite is mixed with polyvinylidene fluoride and acetylene black at a mass ratio of 8: 1: 1 in the NMP solvent, and then mixture coated onto copper foil and dried in vacuum at 120°C to obtain a anode of the Li-ion secondary battery. The anode and cathode flakes, a diaphragm and a lithium hexafluorophosphate electrolyte together form a Li-ion secondary battery. At room temperature, within a voltage window of 2.7 V to 4.5 V, charge and discharge tests are performed at a current density of 0.1 C (0.1 C = 170 mA/g). It is measured that the specific capacity of the battery is about 130 mAh/g.

### Embodiment 20

18 mL of 50% manganese nitrate aqueous solution, 20 mL of 85% phosphoric acid aqueous solution, 70 mL of ethanol and 50 mL of water are mixed, and the mixture is added with 1 g of carbon nanofibers, then ultrasonically dispersed for 30 min, stirred for 24h at 55°C, filtered and heat-treated for 10h at 800°C under the Ar atmosphere to obtain an intermediate manganese pyrophosphate-carbon nanofiber composite material. 0.96 g of the manganese pyrophosphate-carbon nanofibers is mixed with 0.29 g of ferrous oxalate, 0.39 g of lithium hydroxide, 0.19 g of ammonium dihydrogen phosphate and 0.2 g of starch, and the mixture is added with 15 mL of ethanol, then ball-milled for 12h and dried at 80°C to obtain a reaction precursor. The precursor is heat-treated for 10h at 650°C in the Ar gas flow to obtain a final product, i.e., an iron-doped lithium manganese phosphate-carbon nanofiber composite material. It is observed from an electron microscopic picture that the carbon nanofibers are distributed on the surface of and inside the lithium manganese phosphate particles, and a distance between the both is less than 1 nm. The composition of the composite material may be expressed as LiMn_{0.8}Fe_{0.2}PO₄. It is measured by a same method as Embodiment 1 that the specific discharge capacity of the composite material at 0.1 C is 125 mAh/g.

### Embodiment 21

18 mL of 50% manganese nitrate aqueous solution, 20 mL of 85% phosphoric acid aqueous solution, 70 mL of ethanol and 20 mL of water are mixed, and the mixture is added with 0.5 g of carbon nanofibers, then ultrasonically dispersed for 30 min, stirred for 24h at 25°C, filtered and heat-treated for 10h at 500°C under the Ar atmosphere to obtain an intermediate manganese pyrophosphate-carbon nanofiber composite material. 1.16 g of the manganese pyrophosphate-carbon nanofibers is mixed with 0.32 g of lithium carbonate and 0.2 g of acetylene black, and the mixture is added with 10 mL of ethanol, then ball-milled for 6h and dried at 80°C to obtain a reaction precursor. The precursor is heat-treated for 10h at 700°C in the Ar gas flow to obtain a final product, i.e., a lithium manganese phosphate-carbon nanofiber composite material. The analysis indicates that the content of carbon in the composite material is 5%, the tap density of the material is 1.9 g/cm³, and the BET specific surface area is 19 m²/g. It is measured by a same method as Embodiment 1 that the specific discharge capacity of the composite material at 0.1 C is 30 mAh/g.

### Embodiment 22

18 mL of 50% manganese nitrate aqueous solution, 20 mL of 85% phosphoric acid aqueous solution, 70 mL of ethanol and 20 mL of water are mixed, and the mixture is added with 0.3 g of carbon nanofibers, then ultrasonically dispersed for 30 min, stirred for 12h at 25°C, filtered and heat-treated for 10h at 700°C under the Ar atmosphere to obtain an intermediate manganese pyrophosphate-carbon nanofiber composite material. 0.96 g of the manganese pyrophosphate-carbon nanofibers is mixed with 0.24 g of magnesium oxalate, 0.39 g of lithium hydroxide, 0.19 g of ammonium dihydrogen phosphate and 0.2 g of maltose, and the mixture is added with 15 mL of ethanol and then ball-milled for 12h to obtain a reaction precursor. The precursor is heat-treated for 10h at 700°C in the Ar gas flow to obtain a final product, i.e., an iron-doped lithium manganese phosphate-carbon nanofiber composite material. The composition of the composite material may be expressed as LiMn_{0.8}Mg_{0.2}PO₄. The pore volume in the material is 0.2 cm³/g. It is measured by a same method as Embodiment 1 that the specific discharge capacity of the composite material at 0.1 C is 100 mAh/g.

### Embodiment 23

70 mL of 0.5 mol/L manganese nitrate aqueous solution, 30 mL of 0.5 mol/L ferric nitrate aqueous solution, 20 mL of 85% phosphoric acid aqueous solution, 100 mL of ethanol and 50 mL of water are mixed, and the mixture is added with 0.2 g of multi-walled carbon nanotubes, then ultrasonically dispersed for 30 min, stirred for 24h at 55°C, filtered and heat-treated for 10h at 500°C under the Ar atmosphere to obtain an intermediate iron manganese pyrophosphate-carbon nanotube composite material. 1 g of the manganese pyrophosphate-carbon nanotubes is mixed with 0.24 g of lithium carbonate and 0.25 g of cellulose acetate, and the mixture is added with 15 mL of ethanol, then ball-milled for 3h and dried at 100°C to obtain a reaction precursor. The precursor is heat-treated for 20h at 800°C in the Ar gas flow to obtain an iron-doped lithium manganese phosphate-carbon nanotube composite material. The composition of the composite material may be expressed as LiMn_{0.7}Fe_{0.3}PO₄. It is measured by a same method as Embodiment 1 that the specific discharge capacity of the composite material at 0.1 C is 135 mAh/g.

### Embodiment 24

70 mL of 0.5 mol/L manganese nitrate aqueous solution, 30 mL of 0.5 mol/L ferric nitrate aqueous solution, 20 mL of 85% phosphoric acid aqueous solution, 70 mL of ethanol and 50 mL of water are mixed, stirred for 24h at 50°C, filtered, dried, and heat-treated for 5h at 600°C under the Ar atmosphere to obtain an intermediate iron manganese pyrophosphate. 1.42 g of iron manganese pyrophosphate, 0.4 g of lithium carbonate (Li₂CO₃) and 1 g of starch are grinded for 6h to obtain a second reaction precursor. The second reaction precursor is heat-treated for 10h at 600°C under the acetylene atmosphere to obtain an iron-doped lithium manganese phosphate-carbon nanotube composite material. The composition of the composite material may be expressed as LiMn_{0.7}Fe_{0.3}PO₄, and the content of carbon in the composite material is about 6 wt%. After a cathode flake is manufactured by a same method as Embodiment 1, it is measured that the initial discharge capacity of the cathode material is 100 mAh/g.

### Embodiment 25

7 g of manganese sulfate (MnSO₄·H₂O), 3.34 g of ferrous sulfate (FeSO₄·H₂O), 1.66 g of zinc sulfate (NiSO₄·7H₂O), 12 g of ammonium phosphate ((NH₄)₃PO₄·H₂O), 1 g of polyvinyl alcohol and 10 mL of ethanol are ball-milled for 6h, then dried and heat-treated for 2h at 600°C under the N₂ atmosphere to obtain an intermediate cobalt iron manganese pyrophosphate ((Mn_{0.7}Fe_{0.2}Ni_{0.1})₂P₂O₇). The content of carbon in the material is about 4%. 1 g of (Mn_{0.7} Fe_{0.2}Ni_{0.1})₂P₂O₇ is mixed with 0.26 g of lithium carbonate (Li₂CO₃) and 0.5 g of vinyl acetate, and the mixture is added with 15 mL of water, then stirred for 12h and dried at 80°C to obtain a reaction precursor. The reaction precursor is heat-treated for 10h at 700°C in the Ar/H₂ gas flow to obtain a final product, i.e., a Fe-Ni co-doped lithium manganese phosphate-carbon composite material, where the composite material mainly contains a compound in a structural formula of LiMn_{0.7}Fe_{0.2}Ni_{0.1}PO₄, and further contains 3% of carbon. After a cathode is manufactured by a same method as Embodiment 1, it is measured that the initial discharge capacity of the cathode material is 130 mAh/g.

It is to be noted that, terms "comprise", "include" or any other variants in the description are intended to cover non-exclusive inclusion, so that a process, method, object or device including a series of elements not only include these elements, but also further include other elements which are not clearly listed herein, or further include elements inherent to this process, method, object or device. Without more limitations, the element defined by a statement "including a/an..." shall not exclude that a process, method, object or device including this element further has additional same elements. Further, a person of ordinary skill in the art may make other various corresponding variations and deformations according to the technical solutions and technical concept of the present invention. The protection scope is defined by the claims of the present invention.

## Claims

1. A method for preparing a porous lithium manganese phosphate-carbon composite material,
the porous lithium manganese phosphate-carbon composite material wherein multiple nano-pores are distributed in the composite material, the composite material comprises lithium manganese phosphate material and 0.1 wt% to 30 wt% of carbon, and the lithium manganese phosphate material contains compounds in a general formula of LiMnₓM₁₋ₓPO₄, where M comprises any one of Fe, Co, Ni, Mg, Cu, Zn, Zr, Ti, Al, Cr and Ge, and 0.7≤x<0.8,
the carbon is at least from amorphous carbon and/or carbon nanotubes and/or carbon nanofibers contained in the composite material, and
when the carbon is from the carbon nanotubes and/or the carbon nanofibers contained in the composite material, a distance from the carbon nanotubes or carbon nanofibers to the surface of the compounds is less than 1 nm;
the method for preparing a porous lithium manganese phosphate-carbon composite material **characterized in that** it comprises the following steps of: mixing a pyrophosphate material with a lithium source, or optionally further with one or more than two of a doped metal source, a phosphorous source and a carbon source, to obtain a reaction precursor, and then calcining the reaction precursor at a constant temperature under a protective atmosphere or an air atmosphere to obtain the porous lithium manganese phosphate-carbon composite material; and wherein
the pyrophosphate material contains compounds in a general formula of (MnₓM₁₋ₓ)₂P₂O₇ and 0 wt% to 30 wt% of carbon, where M is any one of Fe, Co, Ni, Mg, Cu, Zn, Zr, Ti, Al, Cr and Ge, and where 0.7≤x<0.8.

2. The method for preparing a porous lithium manganese phosphate-carbon composite material according to claim 1, **characterized in that** the constant-temperature calcining of the reaction precursor is carried out at a temperature from 100°C to 2000°C.

3. The method for preparing a porous lithium manganese phosphate-carbon composite material according to claim 1, **characterized in that** the constant-temperature calcining of the reaction precursor lasts for 0-72 hours.

4. The method for preparing a porous lithium manganese phosphate-carbon composite material according to claim 1, comprising the following steps of: mixing a manganese source with a phosphorous source, or optionally further with one or more than two of a doped metal source and a carbon source, to obtain the pyrophosphate material.

5. The method for preparing a porous lithium manganese phosphate-carbon composite material according to claim 4, wherein obtaining the pyrophosphate material further comprises a heat treatment procedure, **characterized in that** a temperature for heat treatment ranges from 100°C to 2000°C.

6. The method for preparing a porous lithium manganese phosphate-carbon composite material according to claim 4, wherein obtaining the pyrophosphate material further comprises a heat treatment procedure, **characterized in that** the heat treatment lasts for 0-72 hours.

7. The method for preparing a porous lithium manganese phosphate-carbon composite material according to claim 1, **characterized in that** the pyrophosphate material is a porous material.

8. The method for preparing a porous lithium manganese phosphate-carbon composite material according to claim 4, **characterized in that** a process for preparing the pyrophosphate material comprises the following steps of: dispersing a manganese source and a phosphorus source, added with carbon nanotubes/nanofibers, or optionally further added with a doped metal source, in a solvent consisting of ethanol and water, and then performing heat treatment under a protective atmosphere or an air atmosphere to form a manganese pyrophosphate-carbon nanotubes/nanofibers composite, i.e., the pyrophosphate material.

9. The method for preparing a porous lithium manganese phosphate-carbon composite material according to claim 4, **characterized in that** the process for preparing the pyrophosphate material comprises the following steps of: mixing manganese nitrate aqueous solution with phosphoric acid aqueous solution, using a mixture of ethanol and water as a solvent, adding and dispersing carbon nanotubes/nanofibers in the solution, stirring the reaction solution for 0.5-48 hours at 10-100°C, filtering and drying, and performing heat treatment at 400-800°C under an inert atmosphere to obtain a manganese pyrophosphate-carbon nanotubes/nanofibers composite, i.e., the pyrophosphate material.

10. The method for preparing a porous lithium manganese phosphate-carbon composite material according to claim 4, comprising the following steps of: mixing a manganese salt with phosphoric acid in a solvent mainly consisting of ethanol and water, stirring for above 1 hour at 10-100°C, separating and drying the solid, and performing heat treatment to the solid at a temperature of 400-800°C under an air atmosphere or a protective atmosphere to obtain the pyrophosphate material.

## Patentansprüche

1. Verfahren zur Herstellung eines porösen Lithiummanganphosphat-Kohlenstoff-Verbundmaterials,
poröses Lithiummanganphosphat-Kohlenstoff-Kompositmaterial, wobei mehrere Nanoporen in dem Kompositmaterial verteilt sind, das Kompositmaterial Lithiummanganphosphatmaterial und 0,1 Gew.-% bis 30 Gew.-% Kohlenstoff umfasst und das Lithiummanganphosphatmaterial enthält Verbindungen in einer allgemeinen Formel von LiMnₓM₁₋ₓPO₄, worin M eines oder mehr als zwei von Fe, Co, Ni, Mg, Cu, Zn, Zr, Ti, Al, Cr und Ge und 0,7 ≤ x ≤ 0,8 umfasst,
der Kohlenstoff besteht mindestens aus amorphem Kohlenstoff und / oder Kohlenstoffnanoröhren und / oder Kohlenstoffnanofasern, die in dem Verbundwerkstoff enthalten sind, und
wenn der Verbundwerkstoff Kohlenstoffnanoröhren und/oder Kohlenstoffnanofasern enthält, beträgt ein Abstand von den Kohlenstoffnanoröhren oder Kohlenstoffnanofasern zur Oberfläche des Verbundwerkstoffs weniger als 1 nm; Verfahren zur Herstellung eines porösen Lithiummanganphosphat-Kohlenstoff-Verbundmaterials **dadurch gekennzeichnet, dass** das Verfahren die folgenden Schritte umfasst: Mischen des Pyrophosphatmaterials mit der Lithiumquelle oder Hinzufügen von einem oder mehr als zwei von einer dotierten Metallquelle, einer Phosphorquelle und eine Kohlenstoffquelle und dann Mischen, um den Reaktionsvorläufer zu erhalten, und dann Kalzinieren des Reaktionsvorläufers bei einer konstanten Temperatur unter einer Schutzatmosphäre oder einer Luftatmosphäre, um das poröse Lithiummanganphosphat-Kohlenstoff-Verbundmaterial zu erhalten; und wobei das Pyrophosphatmaterial Verbindungen in einer allgemeinen Formel von (MnₓM₁₋ₓ)₂P₂O₇ und 0 Gew.-% bis 30 Gew.-% Kohlenstoff enthält, wobei M eines oder mehr als zwei von Fe, Co, Ni, Mg, Cu, Zn, Zr, Ti, Al, Cr und Ge und 0,7 ≤ x ≤ 0,8 umfasst.

2. Verfahren zur Herstellung eines porösen Lithiummanganphosphat-Kohlenstoff-Verbundmaterials nach Anspruch 1, **dadurch gekennzeichnet, dass** das Kalzinieren des Reaktionsvorläufers bei konstanter Temperatur bei einer Temperatur von 100 °C bis 2000 °C durchgeführt wird.

3. Verfahren zur Herstellung eines porösen Lithiummanganphosphat-Kohlenstoff-Verbundmaterials nach Anspruch 1, **dadurch gekennzeichnet, dass** das Kalzinieren des Reaktionsvorläufers bei konstanter Temperatur 0 bis 72 Stunden dauert.

4. Verfahren zur Herstellung eines porösen Lithiummanganphosphat-Kohlenstoff-Verbundmaterials nach Anspruch 1, umfassend die folgenden Schritte: Mischen einer Manganquelle mit einer Phosphorquelle oder Hinzufügen von einer oder mehr als zwei einer dotierten Metallquelle und eine Kohlenstoffquelle und dann Mischen, um das Pyrophosphatmaterial zu erhalten.

5. Verfahren zur Herstellung eines porösen Lithiummanganphosphat-Kohlenstoff-Verbundmaterials nach Anspruch 4, wobei das Verfahren, um das Pyrophosphatmaterial zu erhalten, ferner eine Wärmebehandlung umfasst, **dadurch gekennzeichnet, dass** die Temperatur für die Wärmebehandlung von 100 °C bis 2000 °C reicht.

6. Verfahren zur Herstellung eines porösen Lithiummanganphosphat-Kohlenstoff-Verbundmaterials nach Anspruch 4, wobei das Verfahren, um das Pyrophosphatmaterial zu erhalten, ferner eine Wärmebehandlung umfasst, **dadurch gekennzeichnet, dass** die Wärmebehandlung 0 bis 72 Stunden dauert.

7. Verfahren zur Herstellung eines porösen Lithiummanganphosphat-Kohlenstoff-Verbundmaterials nach Anspruch 1, **dadurch gekennzeichnet, dass** das Pyrophosphatmaterial ein poröses Material ist.

8. Verfahren zur Herstellung eines porösen Lithiummanganphosphat-Kohlenstoff-Verbundmaterials nach Anspruch 4, **dadurch gekennzeichnet, dass** ein Verfahren zur Herstellung des Pyrophosphatmaterials die folgenden Schritte umfasst: Dispergieren einer Manganquelle und einer Phosphorquelle, denen zugesetzt wird Kohlenstoffnanoröhren/Nanofasern oder weiter mit einer dotierten Metallquelle in einem Lösungsmittel, bestehend aus Ethanol und Wasser, versetzt und dann unter einer Schutzatmosphäre oder einer Luftatmosphäre wärmebehandelt, um ein Manganpyrophosphat-Kohlenstoffnanoröhren/Nanofasern-Verbundmaterial zu bilden, d.h. das Pyrophosphatmaterial.

9. Verfahren zur Herstellung eines porösen Lithiummanganphosphat-Kohlenstoff-Verbundmaterials nach Anspruch 4, **dadurch gekennzeichnet, dass** das Verfahren zur Herstellung des Pyrophosphatmaterials die folgenden Schritte umfasst: Mischen einer wässrigen Mangannitratlösung mit einer wässrigen Phosphorsäurelösung. unter Verwendung eines Gemisches aus Ethanol und Wasser als Lösungsmittel, Zugabe und Dispergierung von Kohlenstoffnanoröhren / Nanofasern in der Lösung, Rühren der Reaktionslösung für 0,5 bis 48 Stunden bei 10 bis 100°C, Filtrieren und Trocknen und Durchführen einer Wärmebehandlung bei 400 bis 800°C unter einer inerten Atmosphäre, um das Manganpyrophosphat-Kohlenstoff-Nanoröhren / Nanofaser-Verbundmaterial zu erhalten, d.h. das Pyrophosphatmaterial.

10. Verfahren zur Herstellung eines porösen Lithiummanganphosphat-Kohlenstoff-Verbundmaterials nach Anspruch 4, umfassend die folgenden Schritte: Mischen eines Mangansalzes mit Phosphorsäure in einem Lösungsmittel, das hauptsächlich aus Ethanol und Wasser besteht, Rühren für mehr als 1 Stunde Trennen und Trocknen des Feststoffs bei 10-100°C und Durchführen einer Wärmebehandlung des Feststoffs bei einer Temperatur von 400-800°C unter einer Luftatmosphäre oder einer Schutzatmosphäre, um das Pyrophosphatmaterial zu erhalten.

## Revendications

1. Procédé destiné à la préparation d'un matériau composite de phosphate de lithium manganèse / carbone poreux
le matériau composite de phosphate de lithium manganèse / carbone poreux dans lequel de multiples nanopores sont distribués dans le matériau composite, le matériau composite est constitué d'un matériau de phosphate de lithium manganèse et de 0,1 % en poids à 30 % en poids de carbone et le matériau de phosphate de lithium manganèse contient des composés dans une formule générale de LiMnₓM₁₋ₓPO₄, où M est constitué de l'un quelconque parmi Fe, Co, Ni, Cu, Zn, Mg, Zr, Ti, Al, Cr et Ge et 0,7≤ x <0,8,
le carbone provient au moins de nanotubes de carbone amorphe et/ou de carbone et/ou de nanofibres de carbone contenues dans le matériau composite et
lorsque le carbone provient de nanotubes de carbone et/ou nanofibres de carbone contenues dans le matériau composite, une distance depuis les nanotubes de carbone ou les nanofibres de carbone à la surface de ces composés est inférieure à 1 nm ;
le procédé destiné à la préparation d'un matériau composite de phosphate de lithium manganèse / carbone poreux **caractérisé en ce qu'**il comprend les étapes :
de mélange d'un matériau de pyrophosphate avec une source de lithium, ou éventuellement en outre avec un ou plus que deux parmi une source de métal dopé, une source de phosphore et une source de carbone, pour obtenir un précurseur de réaction et ensuite
de calcination du précurseur de réaction à une température constante sous une atmosphère protectrice ou une atmosphère d'air pour obtenir le matériau composite de phosphate de lithium manganèse / carbone poreux ; et dans lequel
le matériau de pyrophosphate contient des composés dans une formule générale de (MnₓM₁₋ₓ)₂P₂O₇ et de 0 % en poids à 30 % en poids de carbone, où M est l'un quelconque parmi Fe, Co, Ni, Cu, Zn, Mg, Zr, Ti, Al, Cr et Ge et où 0,7≤ x <0,8.

2. Procédé destiné à la préparation d'un matériau composite de phosphate de lithium manganèse / carbone poreux selon la revendication 1, **caractérisé en ce que** la calcination à température constante du précurseur de réaction est effectuée à une température de 100 °C à 2 000 °C.

3. Procédé destiné à la préparation d'un matériau composite de phosphate de lithium manganèse / carbone poreux selon la revendication 1, **caractérisé en ce que** la calcination à température constante du précurseur de réaction dure pendant 0 à 72 heures.

4. Procédé destiné à la préparation d'un matériau composite de phosphate de lithium manganèse / carbone poreux selon la revendication 1, comprenant les étapes :
de mélange d'une source de manganèse avec une source de phosphore, ou éventuellement en outre avec un ou plus que deux parmi une source de métal dopé et une source de carbone, pour obtenir un matériau de pyrophosphate.

5. Procédé destiné à la préparation d'un matériau composite de phosphate de lithium manganèse / carbone poreux selon la revendication 4, dans lequel l'obtention du matériau de pyrophosphate comprend en outre une procédure de traitement thermique, **caractérisée en ce qu'**une température servant au traitement thermique varie de 100 °C à 2 000 °C.

6. Procédé destiné à la préparation d'un matériau composite de phosphate de lithium manganèse / carbone poreux selon la revendication 4, dans lequel l'obtention du matériau de pyrophosphate comprend en outre une procédure de traitement thermique, **caractérisée en ce que** le traitement thermique dure pendant 0 à 72 heures.

7. Procédé destiné à la préparation d'un matériau composite de phosphate de lithium manganèse / carbone poreux selon la revendication 1, **caractérisé en ce que** le matériau de pyrophosphate est un matériau poreux.

8. Procédé destiné à la préparation d'un matériau composite de phosphate de lithium manganèse / carbone poreux selon la revendication 4, **caractérisé en ce qu'**un procédé servant à la préparation du matériau de pyrophosphate comprend les étapes :
de dispersion d'une source de manganèse et d'une source de phosphore, ajoutée avec les nanotubes/nanofibres de carbone, ou éventuellement en outre ajoutée avec une source de métal dopé, dans un solvant constitué d'éthanol et d'eau et ensuite de réalisation du traitement thermique sous une atmosphère protectrice ou une atmosphère d'air pour former un composite de nanotubes/nanofibres de pyrophosphate de manganèse / carbone, c.-à-d., le matériau de pyrophosphate.

9. Procédé destiné à la préparation d'un matériau composite de phosphate de lithium manganèse / carbone poreux selon la revendication 4, **caractérisé en ce que** le procédé destiné à la préparation du matériau de pyrophosphate comprend les étapes : de mélange d'une solution aqueuse de nitrate de manganèse avec une solution aqueuse d'acide phosphorique, à l'aide d'un mélange d'éthanol et d'eau comme solvant, d'ajout et de dispersion de nanotubes/nanofibres de carbone dans la solution, d'agitation de la solution de réaction pendant 0,5 à 48 heures de 10 °C à 100 °C, de filtrage et de séchage et de réalisation d'un traitement thermique de 400 à 800 °C sous une atmosphère inerte pour obtenir un composite de nanotubes/nanofibres de pyrophosphate de manganèse / carbone, c.-à-d., le matériau de pyrophosphate.

10. Procédé destiné à la préparation d'un matériau composite de phosphate de lithium manganèse / carbone poreux selon la revendication 4, comprenant les étapes : de mélange de sels de manganèse avec de l'acide phosphorique dans un solvant composé principalement d'éthanol et de l'eau, d'agitation pendant plus de 1 heure de 10 à 100 °C, de séparation et de séchage des matières solides et de réalisation d'un traitement thermique sur les matières solides à une température de 400 à 800 °C sous une atmosphère d'air ou une atmosphère protectrice pour obtenir le matériau de pyrophosphate.
